# EUROPÄISCHE PATENTSCHRIFT

(11) **EP 2 603 788 B1**
(45) Veröffentlichungstag und Bekanntmachung des Hinweises auf die Patenterteilung: **15.11.2017**
(21) Anmeldenummer: 11761495.8
(22) Anmeldetag: 09.08.2011
(51) Int. Cl.: G01N 23/18

(54) **VERFAHREN ZUR DURCHSTRAHLUNGSPRÜFUNG EINES BAUTEILS MITTELS RÖNTGENSTRAHLEN UNTER VERWENDUNG EINES GLÄTTUNGSMITTELS SOWIE GLÄTTUNGSMITTEL ZUR DURCHFÜHRUNG DES VERFAHRENS**
METHOD FOR RADIOGRAPHICALLY INSPECTING A COMPONENT BY MEANS OF X-RAY BEAMS USING A SMOOTHING AGENT AND SMOOTHING AGENT FOR CARRYING OUT THE METHOD
PROCÉDÉ DE CONTRÔLE RADIOGRAPHIQUE D'UN COMPOSANT AUX RAYONS X À L'AIDE D'UN AGENT DE LISSAGE, ET AGENT DE LISSAGE PERMETTANT LA MISE EN OEUVRE DU PROCÉDÉ

(30) Priorität: 09.08.2010 DE 102010033762
(43) Veröffentlichungstag der Anmeldung: 19.06.2013
(73) Patentinhaber: Rolls-Royce Deutschland Ltd & Co KG, 15827 Blankenfelde-Mahlow (DE)
(72) Erfinder: SCHREIBER, Karl, 15838 Am Mellensee (DE); GEITNER, Josef, 14532 Stahnsdorf (DE)
(74) Vertreter: Hoefer & Partner Patentanwälte mbB
(86) Internationale Anmeldenummer: PCT/EP2011/003984
(87) Internationale Veröffentlichungsnummer: WO 2012/019754

(56) Entgegenhaltungen:
- EP-A2- 0 154 271
- GB-A- 760 617
- JP-A- 57 204 441
- US-A- 753 310
- US-A- 2 162 420
- US-A- 2 916 623
- US-A- 3 102 024

## Beschreibung

Die Erfindung betrifft ein Verfahren zur Durchstrahlungsprüfung eines Bauteils mittels Röntgenstrahlen, insbesondere zur automatischen oder automatisierbaren Durchstrahlungsprüfung, wobei insbesondere ein Bauteil geprüft wird, welches an zumindest einer zu durchstrahlenden Oberfläche mit einer Oberflächenstruktur versehen ist, beispielsweise einer durch einen Bearbeitungsvorgang erzeugten Oberflächenrauigkeit.

Die Erfindung betrifft somit ein Glättungsmaterial zur Oberflächenglättung von einer Durchstrahlungsprüfung mit Röntgenstrahlen ausgesetzte Bauteilen, insbesondere aus niedrig oder hoch legierten Stählen oder Titan-, Aluminium- oder Nickelbasiswerkstoffen, auf der Grundlage einer durch Materialfehler unterschiedlichen Strahlungsabsorption und Intensität der nach der Durchstrahlung des Bauteils auf einen Röntgenfilm auftreffenden Strahlung.

Eine Durchstrahlungsprüfung, insbesondere mittels Röntgenstrahlen oder Gammastrahlen, ist ein bildgebendes Verfahren zur zerstörungsfreien Werkstoffprüfung, bei dem ein zu prüfendes Bauteil mit Röntgenstrahlen durchstrahlt wird und auf einem Röntgenfilm oder einem Röntgenstrahlendetektor ein Projektionsbild des Bauteils dargestellt wird. Aufgrund unterschiedlicher Strahlungsabsorption und entsprechend unterschiedlicher Strahlungsschwächung können in dem Bauteil vorhandene Fehlstellen, Einschlüsse, Seigerungen, Gasblasen, Risse oder Fügungsfehler erkennbar gemacht werden, beispielsweise in Form einer durch die größere Strahlungsintensität bedingten stärkeren Schwärzung des Röntgenfilms.

Die Erkennbarkeit von Materialfehlern wird durch eine Randunschärfe, das heißt ein rings um eine Fehlerstelle vorhandenes Halbschattengebiet, und einen geringen Kontrast (Schwärzungsunterschied), die durch eine Streustrahlung der auf eine unregelmäßige, nicht glatte Bauteiloberfläche auftreffenden elektromagnetischen Wellen bedingt sein können, verringert. Eine unregelmäßige Oberflächengeometrie des zu untersuchenden Bauteils führt jedoch in erster Linie zu verminderter Strahlungsabsorption in bestimmten Oberflächenbereichen und dementsprechend hoher Strahlungsintensität. Die dadurch auf dem Röntgenfilm erzeugten Schwärzungen stellen jedoch keine relevanten Materialfehler dar, sondern verfälschen vielmehr das Prüfungsergebnis bzw. lassen eine exakte Erkennung von Materialfehlern bzw. eine zuverlässige automatische Auswertung nicht zu.

Bei der Durchstrahlungsprüfung werden Wellen- oder Teilchenstrahlen in einem absorbierenden, homogenen Material absorbiert. Die Wahrscheinlichkeit der Absorption pro Wegeinheit ist bei niedrigen Energien in jeder Eindringtiefe gleich. Es gilt dabei das Lambertsche Gesetz. Die Absorption ist dabei von den Eigenschaften des absorbierenden Materials sowie der Energie der Strahlung abhängig. Hieraus ist der Absorptionskoeffizient ermittelbar. Aus diesem lässt sich die Dicke der Halbwertsschicht berechnen. Bei der Durchstrahlung eines Bauteils mittels Röntgen- oder Gammastrahlung ist die Wahrscheinlichkeit für die Absorption somit proportional der Dicke des durchstrahlten Bauteils. Daraus folgt, dass Oberflächenstrukturen, beispielsweise Oberflächenrauigkeiten, zu einer Schwächung des Strahls führen und somit einen Fehler vortäuschen können, welcher in dem Bauteil des Materials nicht existent ist, sondern nur durch die unterschiedliche Bauteildicke hervorgerufen wird.

Es ergeben sich durch die Störungen, welche durch die Oberflächenstruktur hervorgerufen werden, somit Schwächungen des Strahls, die sich in der Halbwertsdicke, welche dem Absorptionskoeffizienten umgekehrt proportional ist, widerspiegeln.

Die US 2 916 623 A beschreibt ein Verfahren zur Ermittlung von Fehlern in einem Bauteil mittels Röntgendurchstrahlung, bei welchem eine pastöse, ein Metallpulver umfassende Substanz auf Oberflächenbereiche aufgetragen wird, um diese zu glätten.

Aus der JP 57 204441 A ist eine Röntgenstrahlen-Maske zur Schweißnahtprüfung bekannt, welche unterschiedliche Dicken eines Werkstücks kompensiert und Metallpulver oder Metalloxidpulver umfasst.

Ein pastenartiges Kunststoffmaterial ist in der GB 760 617 A beschrieben, bei welchem Bleipartikel enthalten sind. Das Material dient zur Abschirmung von gefährlichen Strahlungen.

Die EP 0 154 271 A2 offenbart eine Röntgenstrahlen-Abschirmsubstanz mit unterschiedlichen Bindern und Partikeln. Ähnliche Zusammensetzungen beschreiben die US 2 162 420 A, US 753 310 A und US 3 102 024 A.

Der Erfindung liegt die Aufgabe zugrunde, ein Verfahren zur Durchstrahlungsprüfung eines Bauteils, insbesondere mittels Röntgenstrahlen oder Gammastrahlen, zu schaffen, welches bei einfacher und kostengünstiger Anwendbarkeit ein hohes Maß an Fehlererkennungspräzision aufweist.

Erfindungsgemäß wird die Aufgabe durch die Merkmalskombinationen der unabhängigen Ansprüche gelöst, die jeweiligen Unteransprüche zeigen weitere vorteilhafte Ausgestaltungen der Erfindung.

Die Durchstrahlungsprüfung von Bauteilen mittels Röntgen- oder Gammastrahlen erfolgt auf der Grundlage einer durch Materialfehler im Bauteil veränderten Strahlungsabsorption und Intensität der nach der Durchstrahlung des Bauteils beispielsweise auf einen Röntgenfilm auftreffenden Strahlung und dessen durch die Strahlungsintensität beeinflusster Schwärzung.

Der Kern der Erfindung besteht somit darin, dass eine unebene, ebenfalls unterschiedliche Strahlungsintensitäten bewirkende Oberflächenstruktur (Oberflächentopographie) des Bauteils mit einer Glättungsschicht aus einem Glättungsmaterial abgedeckt wird, welches das gleiche Röntgenabsorptionsverhalten wie der Grundwerkstoff des Bauteils hat, wobei die Halbwertsdicke oder volumenspezifische Strahlungsabsorption des Bauteilwerkstoffs und der aus dem Glättungsmaterial auf der Bauteiloberfläche erzeugten Glättungsschicht identisch oder nahezu identisch sind.

Die Erfindung sieht somit vor, dass bei Bauteilen mit einer rauen Oberfläche die unterschiedlich dicken Oberflächenbereiche mittels einer aus dem erfindungsgemäßen Glättungsmaterial bestehenden Glättungsschicht geglättet werden. Derartige Oberflächenbereiche (Oberflächenstrukturen) können beispielsweise in Form von Schweißnähten ausgebildet sein. Insbesondere bei der Prüfung von Schweißnähten für Rohre, Pipelines oder Ähnlichem, kann somit eine exakte Untersuchung und Materialprüfung erfolgen. Durch die erfindungsgemäße Glättung erzeugen die unterschiedlichen Oberflächenstrukturen keine oder nur unwesentliche Signale, so dass auch kleinste Gefügefehler deutlich erkennbar und identifizierbar sind. Erfindungsgemäß wird somit eine "physikalische Glättung" des zu prüfenden Bauteils durchgeführt.

Das Glättungsmaterial der Glättungsschicht ist so ausgewählt, dass dieses ein Absorptionsverhalten für die Röntgenstrahlen oder Gammastrahlen aufweist, welches gleich ist zu dem Absorptionsverhalten des Grundwerkstoffs.

In der Ausgestaltung des erfindungsgemäßen Verfahrens umfasst die Glättungsschicht ein Material, das zu etwa 35 bis 45 Volumenprozent aus zumindest einer plastisch verformbaren, organischen Masse und zu etwa 55 bis 65 Volumenprozent aus zumindest einem Metallpulver besteht, wobei das Metallpulver überwiegend aus dem Grundwerkstoff des Bauteils sowie einem aus Blei oder Eisen bestehenden zusätzlichen Metallpulver zusammengesetzt ist.

Durch das Aufbringen der Glättungsschicht auf das mit der Oberflächenstruktur versehene, zu untersuchende Bauteil wird eine Verringerung der Strahlungsabsorption oder eine Erhöhung der Strahlungsintensität aufgrund einer unebenen Oberflächentopographie verhindert. Es wird nur eine durch innere Materialfehler bedingte Schwärzung des Röntgenfilms oder Röntgendetektors erzeugt. Hierdurch ist eine exakte, vorzugsweise auch automatisierte Durchstrahlungsprüfung möglich, die insbesondere bei sicherheitsrelevanten Bauteilen von ausschlaggebender Bedeutung ist.

Durch den 65 Volumenprozent nicht überschreitenden Metallpulveranteil ist das Glättungsmaterial ausreichend plastisch verformbar, so dass es als Glättungsschicht auf die Bauteiloberfläche aufgebracht werden kann und nach der Durchstrahlungsprüfung auch wieder abgezogen werden kann. Das Metallpulver besteht im Wesentlichen aus dem Grundmaterial des zu untersuchenden Bauteils. Um jedoch in der gesamten, aus Füllmaterial und Metallpulver bestehenden Glättungsschicht eine dem Grundmaterial entsprechende Strahlungsabsorption zu erreichen, das heißt in dem Bauteil und in der Glättungsschicht die gleiche Halbwertsdicke zu erzielen, enthält das aus dem Grundwerkstoff des Bauteils bestehenden Metallpulver einen Anteil eines Metallpulvers mit höherer Absorptionsfähigkeit als das Grundmaterial des Bauteils, vorzugsweise. Eisen- oder Bleipulver.

Die Glättungsschicht wird beispielsweise bei Bauteilen aus niedrig legierten Stählen und hoch legierten Stählen sowie aus Titanbasiswerkstoffen, Aluminiumbasiswerkstoffen und Nickelbasiswerkstoffen eingesetzt.

Im Folgenden wird die Zusammensetzung des Glättungsmaterials anhand von Beispielen erläutert. Dabei erfolgt jeweils eine Abschätzung der Röntgen-Halbwertsdicken für verschiedene Zusammensetzungen des durchstrahlten Materials eines Bauteils bei einer Röntgenstrahlungsenergie von 100 KEV:

### Beispiel 1:

Bauteile aus Eisen/Stahl und Stähle mit weniger als 30% Legierungsbestandteilen, beispielsweise geschmiedeter, gewalzter oder gegossener Stahl. Ein derartiges Bauteil weist eine Halbwertsdicke von 2,5 mm auf.

Ein bevorzugtes Glättungsmaterial mit einer Halbwertsdicke von 2,5 mm umfasst einen Volumenteil von Blei von 1,8 %, einen Volumenanteil von Eisen von 58,2 % und einen Volumenanteil von organischer Masse von 40%.

### Beispiel 2:

Aluminium und Aluminiumlegierungen mit weniger als 20% Legierungsbestandteilen weisen eine Halbwertsdicke von 16mm auf.

Hierfür wird ein Glättungsmaterial mit einem Volumenanteil von 40 % an organischer Masse sowie einem Volumenanteil von Aluminium von 59,83 % und einem Volumenanteil von Blei von 0,175 % verwendet. Dies führt zu einer Halbwertsdicke von 16 mm.

Alternativ hierzu könnte ein Glättungsmaterial mit einem Volumenanteil an organischer Masse von 40 % einen Volumenanteil an Aluminium von 55,5 % und einen Volumenanteil an Eisen von 4,5 % aufweisen. Auch dies führt zu einer Halbwertsdicke von 16 mm.

### Beispiel 3:

Titan und Titanlegierungen mit weniger als 15 % Legierungsbestandteil weisen eine Halbwertsdicke von 5,6 mm auf.

Ein hierfür geeignetes Glättungsmaterial weist bei einem Anteil von 40 % an organischer Masse einen Volumenanteil an Titan von 59,27 % und einen Volumenanteil an Blei von 0,73 % auf. Dies führt zu einer Halbwertsdicke von 5,6 mm.

Alternativ hierzu kann ein Glättungsmaterial mit einem Volumenanteil an organischer Masse von 40 % und einem Volumenanteil an Titan von 31,3 % und einem Volumenanteil von Eisen von 28,7 % verwendet werden. Auch hierbei ergibt sich eine Halbwertsdicke von 5,6 mm.

### Beispiel 4:

IN 718 (Inconel 718) weist eine Halbwertsdicke von 2,0 mm auf.

Ein hierfür geeignetes Glättungsmaterial weist bei einem Volumenanteil von 40 % an organischer Masse einen Volumenanteil an IN 718 von 57,6 % sowie einen Volumenanteil an Blei von 2,4 % auf. Dies führt zu einer Halbwertsdicke von 2,0 mm.

Bei den oben beschriebenen Ausführungsbeispielen kann die organische Masse beispielsweise so ausgebildet werden, dass sie Wax als Basis aufweist und als Füllstoffe Wasser, Öl, NaCl, Stärke und/oder Kaolin umfasst. Die gewünschte Knetbarkeit des fertigen, mit den Metallpulvern versehenen Glättungsmaterials und die Haftfähigkeit auf dem Untergrund werden durch die Zugabe von Wasser und Öl eingestellt. Somit ist es möglich, das erfindungsgemäße Glättungsmaterial auf eine in üblicher Weise saubere und fettfreie Oberfläche des zu prüfenden Bauteils aufzubringen. Durch Adhäsion ist das Glättungsmaterial selbsthaftend und kann nach der Durchstrahlungsprüfung rückstandsfrei entfernt und wiederverwendet werden. Es ist somit kein Haftmittel erforderlich, es bildet sich zwischen dem Glättungsmaterial und dem Bauteil kein Spalt. Das Glättungsmaterial mittels eines Spachtels aufgespachtelt oder aufgestrichen werden, es ist möglich, dieses aufzuwalzen oder in automatisierter oder teilautomatisierter Weise mittels einer geeigneten Hilfsvorrichtung aufzubringen. Somit kann das erfindungsgemäße Glättungsmaterial auch für die Glättung sehr großer Unebenheiten aufgebracht werden, beispielsweise in Dicken zwischen 0,1 mm bis 10 mm.

Die organische Füllmasse entspricht bevorzugter Weise den Anforderungen gemäß DIN EN 71-7.

Da erfindungsgemäß das Glättungsmaterial eine Mischung aus organischer Masse und Metallpulver ist, wird erfindungsgemäß ein Metallpulver verwendet, welches eine größere Halbwertsdicke aufweist, wie das Grundmaterial des zu prüfenden Bauelements, damit sich in der Summe dieselbe Halbwertsdicke des Glättungsmaterials ergibt, wie bei dem zu prüfenden Bauteil.

Erfindungsgemäß ist es weiterhin besonders günstig, wenn die Partikelgröße des Metallpulvers maximal 10 µm beträgt. Bis zu dieser Größe sind die einzelnen Partikel des Metallpulvers nicht als Teilchen identifizierbar, so dass das Glättungsmaterial für die Durchstrahlungsprüfung homogen ist.

Mit einer aus dem erfindungsgemäßen Glättungsmaterial erzeugten Glättungsschicht auf dem zu untersuchenden Bauteil können somit Materialfehler wie Fehlstellen, Einschlüsse, Seigerungen, Gasblasen, Risse oder Fügungsfehler sowohl visuell als auch in einem automatisierten Verfahren exakt ermittelt werden.

Nachfolgend wird die Erfindung anhand eines Ausführungsbeispiels in Verbindung mit der Zeichnung beschrieben. Dabei zeigt:
- Fig. 1: eine schematische Schnittansicht eines zu prüfenden Bauteils mit aufgebrachter Glättungsschicht,
- Fig. 2: eine schematische Darstellung eines Schwärzungsverlaufs ohne Glättungsschicht, und
- Fig. 3: eine schematische Darstellung des Schwärzungsverlaufs mit virtueller Glättungsschicht.

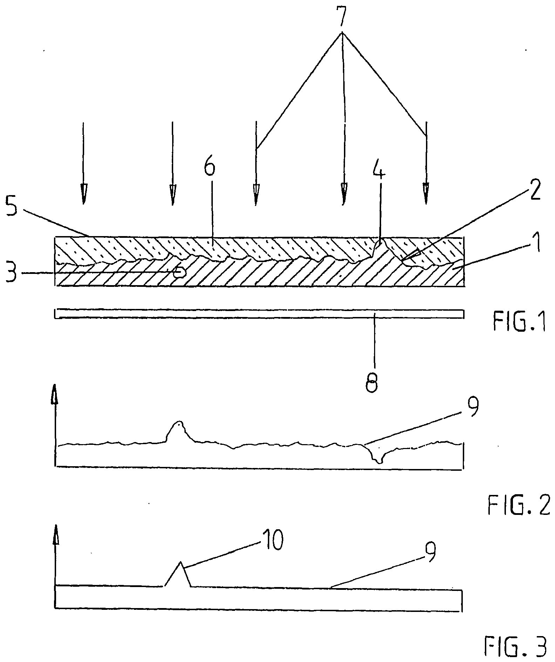

Ein aus Inconel 718 (IN 718) bestehendes geschmiedetes Bauteil 1 mit einer nicht glatten, unebenen Oberflächengeometrie (Oberflächenstruktur 2), das zur Durchstrahlungsprüfung mit Röntgenstrahlen vorgesehen ist, wird mit einer Glättungsschicht 6, bestehend aus 40 Volumenprozent an organischer Masse, 57,6 Volumenprozent IN 718-Pulver und 2,4 Volumenprozent Bleipulver, versehen. Die so ausgebildete Glättungsschicht 6 hat eine Halbwertsdicke von 2,0 mm, die genau der Halbwertsdicke des Bauteilwerkstoffs entspricht (s. Fig. 1).

Als Halbwertsdicke wird die Stärke des Materials bezeichnet, die nötig ist, um bei der Bestrahlung mit Röntgenstrahlen die Strahlungsintensität zu halbieren.

Die Fig. 2 zeigt eine schematische Darstellung einer Schwärzungskurve (Röntgenbild 9, Schwärzungsverlauf), welches sich auf einem Röntgenstrahldetektor 8 / Röntgenfilm ohne die Aufbringung der erfindungsgemäßen Glättungsschicht ergeben würde. Hierbei ist insbesondere ersichtlich, dass die auftretenden Röntgenstrahlen 7 einen inneren Fehler 3, bedingt durch die unebene Oberflächengeometrie (Oberflächenstruktur 2) des Bauteils 1 nicht klar erkennbar wiedergibt, da eine schematisch dargestellte höchste Erhebung 4 ebenfalls ein deutliches Signal abgibt.

Im Vergleich hierzu zeigt die Fig. 3 eine Darstellung analog der Fig. 2 mit der erfindungsgemäßen Glättungsschicht 5 (geglättete Oberfläche). Hierbei ergibt sich, dass der innere Fehler 3 eine klar erkennbare Schwärzungsspitze 10 erzeugt, während die restliche Oberflächenstruktur 2 nicht abgebildet wird, da sie durch die Glättungsschicht 5 geglättet ist.

Aufgrund der glatten Ausbildung der Bauteiloberfläche mit der aus dem angegebenen Beschichtungsmittel bestehenden Glättungsschicht, deren volumenspezifische Strahlungsabsorption mit der des Bauteilwerkstoffs übereinstimmt, wurden bei der Durchstrahlungsprüfung in dem Bauteil vorhandene innere Fehler auf dem Röntgenfilm randscharf und visuell leicht erkennbar dargestellt, während durch Oberflächenunebenheiten bedingte und bei der Auswertung des Röntgenfilms zu Fehlinterpretationen führende Schwärzungen des Röntgenfilms nicht festgestellt wurden. Nach der Durchstrahlungsprüfung wurde die Glättungsschicht wieder von der Bauteiloberfläche abgezogen.

Es versteht sich, dass, wie in Fig. 1 gezeigt, erfindungsgemäß nur eine Oberfläche mit dem Glättungsmaterial versehen werden kann, sofern die andere Oberfläche ausreichend glatt und fehlerfrei ist. Es ist jedoch auch möglich, beide Oberflächen (Strahlungseintrittsfläche und Strahlungsaustrittsfläche) mit dem Glättungsmaterial zu versehen.

### Bezugszeichenliste

- 1: Bauteil
- 2: unebene Oberflächengeometrie / Oberflächenstruktur
- 3: innerer Fehler
- 4: höchste Erhebung von 2
- 5: geglättete Oberfläche
- 6: Glättungsschicht / Glättungsmaterial
- 7: Röntgenstrahlen
- 8: Röntgenstrahldetektor
- 9: Röntgenbild, Schwärzungsverlauf
- 10: Schwärzungsspitze

## Patentansprüche

1. Verfahren zur Durchstrahlungsprüfung eines Bauteils (1) mittels Röntgenstrahlen (7), bei welchem zumindest eine zu durchstrahlende Fläche des Bauteils (1) eine Oberflächenstruktur (2) aufweist, wobei zumindest die mit der Oberflächenstruktur (2) versehene Fläche mit einem Glättungsmaterial (6) zum Ausgleich der Oberflächenstruktur (2) geglättet wird, wobei als Glättungsmaterial (6) zumindest eine organische Masse und zumindest ein Metallpulver verwendet wird, wobei das Glättungsmaterial ein im Wesentlichen gleiches Röntgenabsorptionsverhalten wie der Werkstoff des Bauteils (1) aufweist, **dadurch gekennzeichnet, dass** das Glättungsmaterial (6) zu 35 bis 45 Volumenprozent aus der organischen Masse und zu 55 bis 65 Volumenprozent aus einem mit der organischen Masse vermengten Metallpulvergemisch besteht, wobei das Metallpulvergemisch überwiegend aus dem Grundwerkstoff des Bauteils (1) sowie einem aus Blei oder Eisen bestehenden zusätzlichen Metallpulver zusammengesetzt ist.

2. Verfahren nach Anspruch 1, **dadurch gekennzeichnet, dass** Glättungsmaterial (6) zur Glättung der Oberflächenstruktur (2) mit einer Dicke zwischen 0,1 mm und 10 mm aufgebracht wird.

3. Verfahren nach Anspruch 1 oder 2, **dadurch gekennzeichnet, dass** ein Metallpulver mit einer Partikelgröße von maximal 10 µm verwendet wird.

4. Verfahren nach einem der Ansprüche 1 bis 3, **dadurch gekennzeichnet, dass** ein Metallpulver mit einer größeren Halbwertsdicke als die Halbwertsdicke des Materials des Bauteils (1) verwendet wird.

5. Verfahren nach einem der Ansprüche 1 bis 4, **dadurch gekennzeichnet, dass** das Glättungsmaterial (6) nach der Durchstrahlungsprüfung von der Oberflächenstruktur (2) abgelöst und wiederverwendet wird.

6. Verfahren nach einem der Ansprüche 1 bis 5, **dadurch gekennzeichnet, dass** das Glättungsmaterial (6) manuell oder automatisiert aufgetragen, aufgestrichen, aufgespachtelt oder aufgewalzt wird.

7. Verfahren nach einem der Ansprüche 1 bis 6, **dadurch gekennzeichnet, dass** das Glättungsmaterial (6) ohne zusätzliche Verwendung eines Haftmittels und/oder spaltfrei auf die Oberflächenstruktur (2) aufgebracht wird.

8. Verfahren nach einem der Ansprüche 1 bis 7, **dadurch gekennzeichnet, dass** die Durchstrahlungsprüfung automatisch durchgeführt wird, insbesondere automatisch ausgewertet wird und insbesondere filmlos durchgeführt wird.

9. Verfahren nach einem der Ansprüche 1 bis 8, **dadurch gekennzeichnet, dass** ein für die Durchstrahlungsprüfung eines Bauteils (1) aus Stahl mit weniger als 30 % Legierungsbestandteilen und einer Halbwertsdicke von 2,5 mm vorgesehenes Glättungsmaterial (6) zu 40 Volumenprozent aus der organischen Masse, zu 58,2 Volumenprozent aus Eisenpulver und zu 1,8 Volumenprozent aus Bleipulver besteht und eine Halbwertsdicke von 2,5 mm hat; oder
dass ein für die Durchstrahlungsprüfung eines Bauteils (1) aus Aluminium und Aluminiumlegierungen mit weniger als 20 % Legierungsbestandteilen und einer Halbwertsdicke von 16 mm vorgesehenes Glättungsmaterial (6) zu 40 Volumenprozent aus der organischen Masse, zu 59,83 Volumenprozent aus Aluminiumpulver und zu 0,175 Volumenprozent aus Bleipulver besteht und eine Halbwertsdicke von 16 mm hat; oder
dass ein für die Durchstrahlungsprüfung eines Bauteils (1) aus Aluminium und Aluminiumlegierungen mit weniger als 20 % Legierungsbestandteilen und einer Halbwertsdicke von 16 mm vorgesehenes Glättungsmaterial (6) zu 40 Volumenprozent aus der organischen Masse, zu 55,5 Volumenprozent aus Aluminiumpulver und zu 4,5 Volumenprozent aus Eisenpulver besteht und eine Halbwertsdicke von 16mm hat; oder
dass ein für die Durchstrahlungsprüfung eines Bauteils (1) aus Titan und Titanlegierungen mit weniger als 15 % Legierungsbestandteilen und einer Halbwertsdicke von 5,6 mm vorgesehenes Glättungsmaterial (6) zu 40 Volumenprozent aus organischer Masse, zu 59,27 Volumenprozent aus Titanpulver und zu 0,73 Volumenprozent aus Bleipulver besteht und eine Halbwertsdicke von 5,6 mm hat, oder
dass ein für die Durchstrahlungsprüfung eines Bauteils (1) aus Titan und Titanlegierungen mit weniger als 15 % Legierungsbestandteilen und einer Halbwertsdicke von 5,6 mm vorgesehenes Glättungsmaterial (6) zu 40 Volumenprozent aus organischer Masse, zu 31,3 Volumenprozent aus Titanpulver und zu 28,7 Volumenprozent aus Eisenpulver besteht und eine Halbwertsdicke von 5,6 mm aufweist, oder
dass ein für die Durchstrahlungsprüfung eines Bauteils (1) aus dem Nickelbasiswerkstoff Inconel 718 mit einer Halbwertsdicke von 2,0 mm vorgesehenes Glättungsmaterial (6) zu 40 Volumenprozent aus der organischen Masse, zu 57,6 Volumenprozent aus Inconel 718-Pulver und zu 2,4 Volumenprozent aus Bleipulver besteht und eine Halbwertsdicke von 2,0 mm aufweist.

10. Verfahren nach einem der Ansprüche 1 bis 9, **dadurch gekennzeichnet, dass** ein Glättungsmaterial (6) verwendet wird, welches plastisch verformbar, insbesondere knetbar ist.

## Claims

1. Method for radiographically inspecting a component (1) by means of X-rays (7), where at least one component (1) surface to be radiographed is provided with a surface structure (2), where at least the surface provided with the surface structure (2) is smoothed by means of a smoothing material (6) to level out the surface structure (2), with at least one organic compound and at least one metal powder being used as smoothing material (6), with the X-ray absorption behaviour of the smoothing material essentially equalling the X-ray absorption behaviour of the material of the component (1), **characterized in that** the smoothing material (6) consists by 35 to 45 percent by volume of the organic compound and by 55 to 65 percent by volume of a metal powder mixture, mixed with the organic compound, where the metal powder mixture is predominantly made up of the base material of the component (1) and an additional metal powder consisting of lead or iron.

2. Method in accordance with Claim 1, **characterized in that** smoothing material (6) for smoothing the surface structure (2) is applied in thicknesses between 0.1 mm and 10 mm.

3. Method in accordance with Claim 1 or 2, **characterized in that** a metal powder having a particle size of max. 10 µm is used.

4. Method in accordance with one of the Claims 1 to 3, **characterized in that** a metal powder is used that has a greater half-value thickness than the material of the component (1).

5. Method in accordance with one of the Claims 1 to 4, **characterized in that** the smoothing material (6) after radiographic inspection is removed from the surface structure (2) and re-used.

6. Method in accordance with one of the Claims 1 to 5, **characterized in that** the smoothing material (6) is applied in a manual or automated manner, by means of a brush, a spatula or a roller.

7. Method in accordance with one of the Claims 1 to 6, **characterized in that** the smoothing material (6) is applied to the surface structure (2) without additionally using an adhesive and/ or without forming a gap.

8. Method in accordance with one of the Claims 1 to 7 **characterized in that** the radiographic inspection is carried out automatically and, in particular, evaluated automatically, and more particularly without using films.

9. Method in accordance with one of the Claims 1 to 8, **characterized in that** a smoothing material (6) provided for radiographic inspection of a component (1) made of steel with less than 30 % of alloying constituents and a half-value thickness of 2.5 mm consists of 40 percent by volume of organic compound, of 58.2 percent by volume of iron powder and of 1.8 percent by volume of lead powder and has a half-value thickness of 2.5 mm, or
that a smoothing material (6) provided for radiographic inspection of a component (1) made of aluminum and aluminum alloys with less than 20 % of alloying constituents and a half-value thickness of 16 mm consists of 40 percent by volume of organic compound, of 59.83 percent by volume of aluminum powder and of 0.175 percent by volume of lead powder and has a half-value thickness of 16 mm, or
that a smoothing material (6) provided for radiographic inspection of a component (1) made of aluminum and aluminum alloys with less than 20 % of alloying constituents and a half-value thickness of 16 mm consists of 40 percent by volume of organic compound, of 55.5 percent by volume of aluminum powder and of 4.5 percent by volume of iron powder and has a half-value thickness of 16 mm, or
that a smoothing material (6) provided for radiographic inspection of a component (1) made of titanium and titanium alloys with less than 15% of alloying constituents and a half-value thickness of 5.6 mm consists of 40 percent by volume of organic compound, of 59.27 percent by volume of titanium powder and of 0.73 percent by volume of lead powder and has a half-value thickness of 5.6 mm, or
that a smoothing material (6) provided for radiographic inspection of a component (1) made of titanium and titanium alloys with less than 15% of alloying constituents and a half-value thickness of 5.6 mm consists of 40 percent by volume of organic compound, of 31.3 percent by volume of titanium powder and of 28.7 percent by volume of iron powder and has a half-value thickness of 5.6 mm, or
that a smoothing material (6) provided for radiographic inspection of a component (1) made of the nickel-base material INCONEL 718 with a half-value thickness of 2.0 mm consists of 40 percent by volume of organic compound, of 57.6 percent by volume of INCONEL 718 powder and of 2.4 percent by volume of lead powder and has a half-value thickness of 2.0 mm.

10. Method in accordance with one of the Claims 1 to 9, **characterized in that** a smoothing material (6) is used, which is plastically deformable, in particular kneadable.

## Revendications

1. Procédé destiné au contrôle radiographique d'un composant (1) au moyen de rayons X, lors duquel au moins une surface à radiographier du composant (1) présente une structure superficielle (2), sachant qu'au moins la surface dotée de la structure superficielle (2) est lissée par un matériau de lissage (6) pour niveler la structure superficielle (2), sachant que sont utilisés comme matériau de lissage (6) au moins une matière organique et au moins une poudre métallique, sachant que le matériau de lissage présente un comportement d'absorption des rayons X essentiellement identique à celui du matériau du composant (1), **caractérisé en ce que** le matériau de lissage (6) est constitué de 35 à 45 % en volume de la matière organique et de 55 à 65 % en volume d'un mélange de poudre métallique mêlé de matière organique, sachant que le mélange de poudre métallique se compose principalement du matériau de base du composant (1) et d'une poudre métallique supplémentaire constituée de plomb ou de fer.

2. Procédé selon la revendication n° 1, **caractérisé en ce que** le matériau de lissage (6) servant à lisser la structure superficielle (2) est appliqué avec une épaisseur comprise entre 0,1 mm et 10 mm.

3. Procédé selon la revendication n° 1 ou n° 2, **caractérisé en ce qu'**est utilisée une poudre métallique présentant une taille de particules maximale de 10 µm.

4. Procédé selon une des revendications n° 1 à n° 3, **caractérisé en ce qu'**est utilisée une poudre métallique avec une épaisseur de demi-atténuation supérieure à l'épaisseur de demi-atténuation du matériau du composant (1).

5. Procédé selon une des revendications n° 1 à n° 4, **caractérisé en ce que** le matériau de lissage (6) est détaché et réutilisé après le contrôle radiographique de la structure superficielle (2).

6. Procédé selon une des revendications n° 1 à n° 5, **caractérisé en ce que** le matériau de lissage (6) est appliqué de manière manuelle ou automatisée, au pinceau, à la spatule ou par laminage.

7. Procédé selon une des revendications n° 1 à n° 6, **caractérisé en ce que** le matériau de lissage (6) est appliqué sur la structure superficielle (2) sans utiliser d'agent adhésif supplémentaire et/ ou sans laisser d'interstice.

8. Procédé selon une des revendications n° 1 à n° 7, **caractérisé en ce que** le contrôle radiographique est exécuté automatiquement, notamment évalué automatiquement et plus particulièrement sans film.

9. Procédé selon une des revendications n° 1 à n° 8, **caractérisé en ce qu'**un matériau de lissage (6) prévu pour le contrôle radiographique d'un composant (1) en acier avec moins de 30 % de composants d'alliage et une épaisseur de demi-atténuation de 2,5 mm contient 40 % en volume de matière organique, 58,2 % en volume de poudre de fer et 1,8 % en volume de poudre de plomb et possède une épaisseur de demi-atténuation de 2,5 mm, ou
qu'un matériau de lissage (6) prévu pour le contrôle radiographique d'un composant (1) en aluminium et alliages d'aluminium avec moins de 20 % de composants d'alliage et une épaisseur de demi-atténuation de 16 mm contient 40 % en volume de matière organique, 59,83 % en volume de poudre d'aluminium et 0,175 % en volume de poudre de plomb et possède une épaisseur de demi-atténuation de 16 mm, ou
qu'un matériau de lissage (6) prévu pour le contrôle radiographique d'un composant (1) en aluminium et alliages d'aluminium avec moins de 20 % de composants d'alliage et une épaisseur de demi-atténuation de 16 mm contient 40 % en volume de matière organique, 55,5 % en volume de poudre d'aluminium et 4,5 % en volume de poudre de fer et possède une épaisseur de demi-atténuation de 16 mm, ou
qu'un matériau de lissage (6) prévu pour le contrôle radiographique d'un composant (1) en titane et alliages de titane avec moins de 15 % de composants d'alliage et une épaisseur de demi-atténuation de 5,6 mm contient 40 % en volume de matière organique, 59,27 % en volume de poudre de titane et 0,73 % en volume de poudre de plomb et possède une épaisseur de demi-atténuation de 5,6 mm, ou
qu'un matériau de lissage (6) prévu pour le contrôle radiographique d'un composant (1) en titane et alliages de titane avec moins de 15 % de composants d'alliage et une épaisseur de demi-atténuation de 5,6 mm contient 40 % en volume de matière organique, 31,3 % en volume de poudre de titane et 28,7 % en volume de poudre de fer et possède une épaisseur de demi-atténuation de 5,6 mm, ou
qu'un matériau de lissage (6) prévu pour le contrôle radiographique d'un composant (1) en matériau à base de nickel INCONEL 718 avec une épaisseur de demi-atténuation de 2,0 mm contient 40 % en volume de matière organique, 57,6 % en volume de poudre INCONEL 718 et 2,4 % en volume de poudre de plomb et possède une épaisseur de demi-atténuation de 2,0 mm.

10. Procédé selon une des revendications n° 1 à n° 9, **caractérisé en ce qu'**est utilisé un matériau de lissage (6) plastiquement déformable, notamment modelable.
